# DEMANDE DE BREVET EUROPEEN

(11) **EP 1 096 394 A1**
(43) Date de publication de la demande: **02.05.2001**
(21) Numéro de dépôt: 00402969.0
(22) Date de dépôt: 26.10.2000
(51) Int. Cl.: G06F 17/30, G06F 7/00, G06F 9/44

(54) **Système et procédé de gestion de la persistance des composants EJB dans un annuaire accédé par LDAP**

(30) Priorité: 26.10.1999 FR 9913373
(71) Demandeur: Evidian, 78340 Les Clayes sous Bois (FR)
(72) Inventeur: Desgranges, Paul, 38000 Grenoble (FR); Coq, Philippe, 38610 Gieres (FR); Exertier, François, 38410 St Martin du Riage (FR)
(74) Mandataire: Colombe, Michel

(57) **Abrégé**

La présente invention concerne un procédé de gestion de la persistance de composants (8) EJB intégrés à un serveur (3) EJB d'un système (1) informatique consistant à gérer la persistance au travers d'un annuaire (4) LDAP en :
- déployant des composants EJB qui intègrent des informations sur les entrées LDAP de l'annuaire (4) ;
- échangeant des informations entre un client (2) et l'annuaire (4) LDAP en effectuant une conversion au moyen de classes de conversion (25) pour effectuer des opérations requises par le client (2).

La présente invention concerne également le système de mise en oeuvre dudit procédé.

## Description

La présente invention concerne la technologie EJB, Enterprise JavaBeans (terme déposé à titre de marque), et plus particulièrement, la persistance de composants EJB dans un annuaire accédé par LDAP d'un système informatique.

### L'art antérieur

La technologie EJB définit une architecture pour déployer et exécuter des applications distribuées. La spécification de cette architecture a pour but de faciliter et de normaliser le développement, le déploiement et l'assemblage au sein de plates-formes informatiques de composants logiciels applicatifs, appelés composants EJB. Les composants EJB sont portables, transactionnels, sécurisés, multi-utilisateurs, orientés bases de données. Ils sont non seulement indépendants de la machine dans laquelle ils sont installés et de son système d'exploitation mais aussi de la plateforme à laquelle appartient ladite machine.

La technologie LDAP (Leightweight Directory Access Protocol-Protocole léger d'accès à un annuaire) est à ce jour un standard ouvert définissant une méthode d'accès et de mise à jour de données dans un service d'annuaire distribué. Dans toute la description qui suit, un composant EJB est persistant lorsque son état est sauvegardé dans un moyen de stockage. Actuellement le seul moyen de stockage supporté dans les spécifications EJB pour la persistance des composants EJB est une base relationnelle, accédée au travers des interfaces standards JDBC (Java Database Connectivity - accès java à une base de donnée), JSQL (Java SQL). Il n'existe pas dans la spécification de la technologie EJB la possibilité de rendre persistants des composants EJB dans un annuaire accédé par LDAP.

Un but de la présente invention consiste à assurer la persistance des composants EJB dans un annuaire accédé par LDAP.

Un autre but de l'invention est d'assurer la persistance de manière suffisamment souple pour s'adapter à différents schémas LDAP.

### Résumé de l'invention

Dans ce contexte, la présente invention propose un procédé de gestion de la persistance de composants EJB intégrés à un serveur EJB d'un système informatique, caractérisé en ce qu'il consiste à gérer la persistance au travers d'un annuaire accédé par LDAP en faisant correspondre et en adaptant un composant EJB entité à un type d'entrée LDAP déterminé sur un annuaire donné.

La présente invention concerne également le système informatique comprenant au moins un client, au moins un serveur EJB comportant des composants EJB, au moins un annuaire accédé par LDAP constitué d'entrées LDAP, caractérisé en ce qu'il comporte des moyens permettant de faire correspondre et d'adapter un composant EJB d'entité à un type d'entrée LDAP déterminé sur un annuaire donné.

### Présentation des figures

D'autres caractéristiques et avantages de l'invention apparaîtront à la lumière de la description qui suit, donnée à titre d'exemple illustratif et non limitatif de la présente invention, en référence aux dessins annexés dans lesquels:
- la figure 1 est une vue schématique d'une forme de réalisation du système selon l'invention ;
- la figure 2 est un exemple d'entrée client représentée sur la figure 1 ;
- la figure 3 est un exemple de table de conversion représentée sur la figure 1;
- la figure 4 est un schéma représentant un exemple de classes de conversion représentées sur la figure 1 ;
- les figures 5a et 5b représentent deux formes de réalisation de composants EJB sous forme générique du système selon la présente invention.

### Description d'une forme de réalisation de l'invention

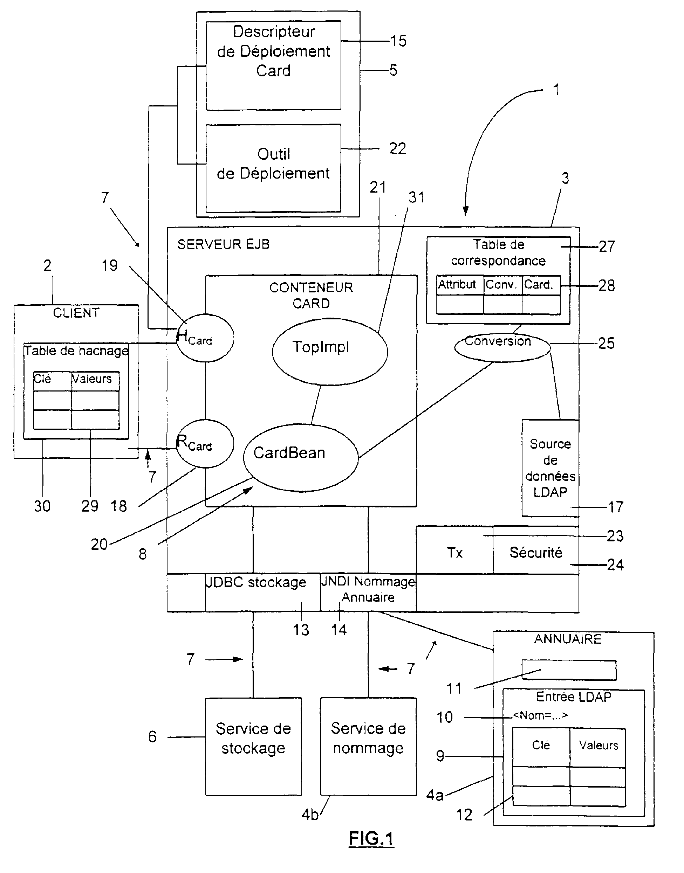

Comme le montre la figure 1, un système informatique 1 est distribué et composé de machines 2 à 6 organisées en un ou plusieurs réseaux 7. Une machine est une unité conceptuelle très large, de nature matérielle et logicielle. Les machines peuvent être très diverses, telles que des stations de travail, serveurs, routeurs, machines spécialisées. Seuls les composants des machines du système 1 caractéristiques de la présente invention seront décrits, les autres composants étant connus de l'homme du métier.

Il est à noter que les machines 2-6 sont susceptibles d'être regroupées les unes aux autres de diverses façons. La figure 1 représente un exemple de forme de réalisation de l'invention.

Le système informatique 1 selon la présente invention comporte au moins une machine 2 client, au moins un serveur 3 d'application appelé serveur EJB, au moins une machine ressource 4 qui dans la forme de réalisation décrite, se présente sous la forme d'un annuaire accédé par LDAP et appelé ci-après annuaire LDAP. Le système 1 est basé sur une architecture à trois niveaux avec serveur 3 d'application.

L'application est entendue au sens large, à savoir tout module logiciel permettant de réaliser un ensemble de procédures et de traitements destinés par exemple à résoudre des problèmes administratifs, scientifiques ou techniques. Dans l'exemple illustré sur la figure 1, l'application ne peut être représentée car elle est constituée de modules logiciels nombreux et variés suivant l'application sur des machines également variées.

Le terme « métier » dans toute la présente description désigne tout ce qui se rapporte aux applications tournant dans le système 1, par opposition à l'infrastructure offerte par le système 1.

La machine serveur 3 et la machine ressource 4 sont entendues au sens large, à savoir toute entité respectivement offrant des services aux machines clientes 2, contenant des informations nécessaires au fonctionnement des applications.

Dans la forme de réalisation selon l'invention telle qu'illustrée sur la figure 1, un composant 8 EJB est un module logiciel tournant sur la partie serveur de l'application, à savoir le serveur 3 EJB.

Les caractéristiques de la technologie EJB, de l'annuaire LDAP et de l'interface JNDI nécessaires à la compréhension de l'invention sont exposées dans ce qui suit.

Dans la technologie EJB, le composant 8 EJB est portable à travers tout type de serveurs et de systèmes d'exploitation. Le composant EJB encapsule des ensembles complets de comportements.

Les composants EJB dans la technologie EJB sont de deux types : le composant EJB de type session et le composant EJB de type entité.

Le composant EJB de type session, appelé ci-après composant EJB session, représente un unique client dans le serveur 3 EJB. Un client communique avec le serveur EJB en appelant des méthodes appartenant aux composants EJB session. Un composant EJB session exécute une tâche pour ledit client. Lorsque la communication avec le client est interrompue, le composant EJB session correspondant n'est plus valable : il n'est pas persistant. Le composant EJB session subsiste le temps d'un appel de méthode ou d'une session client.

Le composant EJB de type entité, appelé ci-après composant EJB entité, représente un enregistrement de données dans un moyen de stockage tel qu'une base de données. Le composant 8 EJB entité est apte à être partagé par plusieurs clients.

Quelques rappels sur les principales caractéristiques de l'annuaire LDAP et de l'interface JNDI sont faits dans ce qui suit pour permettre de mieux comprendre l'invention.

Les caractéristiques d'un annuaire LDAP sont les suivantes :
- Les données sont organisées de manière hiérarchique. Sous une «racine» unique dérivent des «branches». A chaque «noeud», on peut trouver soit d'autres branches, soit des «feuilles».
- L'unité de stockage est appelée une «entrée LDAP» 9 (figure 1). L'entrée 9 LDAP est soit un noeud, soit une feuille.
- A une entrée LDAP est associé un certain nombre d'informations qui lui sont propres ; ces informations sont appelées les «attributs» de l'entrée.
- Une entrée 9 est identifiée de manière non ambiguë par l'intermédiaire d'un nom 10 unique, appelé le dn (nom distinctif - distinguished name).
- L'annuaire 4 LDAP possède un fichier de configuration appelé le «schéma» 11, qui définit les différents types d'entrées admissibles.
- Les attributs LDAP sont typés. La définition d'un attribut est faite dans le schéma. La définition d'un attribut comporte un nom, un type, une cardinalité. Lorsqu'un attribut a une unique valeur, il est dit mono-valué ; lorsqu'il peut prendre plusieurs valeurs, il est dit multi-valué. La caractéristique déterminant si l'attribut est mono ou multi-valué est appelée la cardinalité. Un attribut peut être stocké dans un annuaire LDAP sous différentes formes, notamment sous forme de chaîne de caractères, ou sous forme de tableau d'octets.
- Les entrées LDAP sont typées ; le type d'une entrée LDAP est appelé « classe d'objet ». La définition d'une classe d'objet est faite dans le schéma 11. La classe d'objet est un attribut de l'entrée 9 LDAP.
- La définition d'une classe d'objet comporte le nom de la classe d'objet, le nom des attributs obligatoires, le nom des attributs facultatifs, un identifiant OID (Object Identifier) non utilisé dans la présente invention, un supérieur.
- Le supérieur d'une classe d'objet est la classe d'objet dont hérite l'entrée 9 LDAP en question. Les attributs obligatoires et facultatifs du supérieur sont hérités. Le supérieur peut lui-même disposer d'un supérieur. L'attribut classe d'objet prend toutes les valeurs de l'arbre d'héritage des classes d'objet de l'entrée LDAP en question.
- Un annuaire LDAP est optimisé pour la consultation. Il est possible de retrouver une entrée donnée grâce à des requêtes portant sur un grand nombre de critères (présence d'un attribut, valeur d'un attribut, nom comportant certains caractères, combinaison logique de plusieurs critères, ...).

La figure 1 représente une entrée 9 LDAP. L'entrée 9 LDAP est représentée par le dn 10 et une liste 12 d'attributs. Chaque attribut de la liste 12 est constitué d'un nom (d'une clé sur la figure 1) et d'une série de valeurs. Le dn a pour type java une chaîne de caractères. Les clés et valeurs sont de type chaînes de caractères ; il est possible d'avoir des valeurs d'attributs de type « tableau d'octets ».

Pour manipuler les entrées 9 d'un annuaire 4, le langage java offre les types Attribute et Attributes. Le type java Attribute (« javax.naming.Directory.Attribute ») dans la présente forme de réalisation représente un attribut LDAP identifié par un nom, et une série de valeurs associées audit attribut. Une ligne de la liste 12 vue plus haut est de type Attribute. Le type java Attributes (« javax.naming.Directory.Attributes ») représente une liste constituée d'une collection d'éléments de type Attribute. La liste 12 d'attributs d'une entrée LDAP est de type Attributes.

L'entrée 9 LDAP se caractérise, comme vu précédemment, par un nom (dn 10), de type chaîne de caractères et par une succession d'objets de type Attribute formant un unique objet de type Attributes (liste 12). Le nom est formé en partie par le couple <nom d'attribut, valeur d'attribut> d'un attribut particulier appelé attribut de nommage.

Les opérations d'accès en lecture/écriture aux données des bases de données sont réalisées au moyen d'interface programmatique applicatives, API. Une API 13 JDBC offre un accès en lecture/écriture dans une base de données relationnelles : la base effectue le stockage des informations persistantes. Une API 14 JNDI (Java Naming and Directory Interface - Interface java de nommage et annuaire) permet un accès en lecture/écriture à différents services de nommage et/ou d'annuaire dont par exemple un service d'annuaire accédé par LDAP.

La présente invention porte sur la persistance des composants 8 EJB entités dans l'annuaire 4 LDAP.

La persistance signifie que les données stockées dans des moyens adaptés d'enregistrement du composant 8 EJB entité subsistent au-delà de la durée de vie de l'application concernée ou du serveur 3 EJB contenant les composants 8 EJB.

Dans la présente invention, la base de données utilisée pour gérer la persistance des composants EJB est l'annuaire 4 LDAP. L'API permettant d'accéder à LDAP est l'API 14 JNDI.

La présente invention se base sur le composant 8 EJB entité. Le système 1 informatique selon la présente invention comporte des moyens permettant de faire correspondre et d'adapter un composant 8 EJB entité à une classe d'objet déterminé sur un annuaire donné.

Selon une première forme de réalisation du système 1, les moyens de mise en correspondance et d'adaptation comprennent au moins un descripteur 15 de déploiement.

Le descripteur 15 de déploiement établit la correspondance entre un composant 8 EJB et une classe d'objet de l'annuaire 4, à savoir que les informations nécessaires pour établir la correspondance entre un composant EJB et une classe d'objet sont contenues dans le descripteur de déploiement. Le descripteur 15 de déploiement associe également le composant 8 EJB à un contexte d'un annuaire 4 donné.

Le descripteur 15 de déploiement permet d'adapter le composant 8 EJB au schéma 11 LDAP. Le descripteur de déploiement comprend dans la présente forme de réalisation (annexe 1 - Card.properties) les trois informations de correspondance suivantes :
- deux informations de correspondance avec le schéma de l'annuaire : les valeurs de l'attribut classe d'objet (« objectClass »), le nom des attributs de cette classe d'objet (« attributes ») ;
- une information de correspondance avec le contexte de l'annuaire : le nom d'une source 17 de données (« datasource.name ») sur lequel le composant EJB fonctionne.

Le serveur 3 EJB comprend au moins un module logiciel appelé source 17 de données dans lequel est référencé un contexte particulier de travail JNDI et donc un contexte particulier de travail LDAP. La source 17 de données est une entité logique sur laquelle il est possible d'ouvrir des connexions pour effectuer des opérations sur des données: lesdites données sont externes au serveur EJB et stockées dans l'annuaire 4 accédé par LDAP à travers JNDI. Chaque source 17 de données permet des opérations vers un contexte particulier. La source 17 de données sur laquelle le composant 8 EJB fonctionne est indiquée dans le descripteur 15 de déploiement. Dans la présente invention, la source de donnée utilisée est une source de donnée LDAP: une source de données LDAP permet d'obtenir un contexte de travail JNDI. Les requêtes de création, modification, suppression, recherche, lecture sont effectuées sur ledit contexte de travail.

Selon une deuxième forme de réalisation, les moyens de mise en correspondance et d'adaptation sont intégrés au composant EJB. Ils reçoivent des informations d'adaptation provenant du client 2 et retrouvent les informations de correspondance avec le schéma à partir desdites informations d'adaptation. Les informations de correspondance sont identiques à celles de la première forme de réalisation. L'information de correspondance avec le contexte, c'est-à-dire le nom de la source 17 de donnée est retrouvée de la même façon que dans la première forme de réalisation, à savoir à partir du descripteur 15 de déploiement.

Toutes les valeurs de l'attribut classe d'objet sont susceptibles d'être retrouvées à partir de la valeur de la classe d'objet la plus basse dans la hiérarchie : cette dernière est appelée la classe d'objet caractéristique, COC. Les différentes valeurs de la classe d'objet, la liste des attributs obligatoires, et la liste des attributs facultatifs peuvent être retrouvées en fonction de la classe d'objet caractéristique, COC.

Les informations d'adaptation transmises par le client 2 comprennent la classe d'objet caractéristique, COC.

Le composant 8 EJB entité, dans l'exemple illustré sur la figure 1, le composant Card, comprend les parties suivantes :
- une classe 18 d'interface distante (« remote » dans les spécifications EJB) qui représente la vue cliente du composant 8. La classe 18 d'interface distante contient les signatures des méthodes métier du composant telles que, par exemple, la méthode « get() » de récupération d'une entrée LDAP et la méthode « set() » de modification d'une entrée LDAP. La signature d'une méthode est constituée du nom de la méthode, de l'ensemble des types de paramètres utilisés par la méthode, et du type retourné par la méthode. L'annexe 2 constitue un exemple de codage de la classe d'interface distante et les signatures y sont visibles : la méthode « get() » a pour signature « public Hashtable get() » et la méthode « set() » « public void set(Hashtable h) » . La figure 1 représente une instance 18 de la classe d'interface distante du composant Card, R_{card}, appelée ci-après interface 18 distante.
- une classe 19 d'interface de gestion (« home » dans les spécifications EJB) comprenant les signatures des méthodes utilisées pour gérer le cycle de vie du composant EJB. Une méthode de gestion du cycle de vie, la création « create() », est donnée dans l'exemple illustré à l'annexe 3 (l'annexe 3 constituant un exemple de codage de la classe d'interface de gestion). La signature de la méthode «create()» est « public Card create(Hashtable h) ». Les méthodes de gestion peuvent également être la suppression « remove() » ou la recherche de composant « findBy() »... La figure 1 représente une instance 19 de la classe d'interface de gestion du composant Card, H_{card}, appelée ci-après interface 19 de gestion.
- une classe 20 du composant 8 implémentant les méthodes métier, ainsi que toutes les méthodes permettant au serveur EJB de gérer le cycle de vie du composant EJB « ejbCreate() », « ejbRemove() », « ejbFind() », « get() », « set() », « ejbLoad() », « ejbStore() » », ...A la méthode « create » de la classe 19 d'interface de gestion correspond la méthode « ejbCreate » de la classe 20 du composant. Les interfaces 18 et 19 ne contiennent pas les signatures des méthodes « ejbLoad », « ejbStore » car ces méthodes ne sont pas appelées par le client 2 mais sont uniquement nécessaires au serveur EJB (pour charger en mémoire ou décharger sur disque l'instance du composant concerné). Le client 2 utilise les méthodes métier du composant 8 via l'interface distante 18 et les méthodes de gestion via l'interface 19 de gestion. La figure 1 représente une instance 20 de la classe du composant Card, Cardbean, appelée ci-après instance 20 de composant.

L'interface entre le composant 8 EJB et le serveur 3 EJB est constitué par un module appelé conteneur 21. Le système 1 comprend la machine 5 dite machine 5 de déploiement permettant le déploiement du composant 8 EJB: le déploiement consiste notamment à écrire le descripteur de déploiement et à générer les classes 18, 19, 20 et le conteneur 21. Les composants 8 EJB sont réutilisables et configurables. L'intégration du composant 8 EJB dans le serveur 3 EJB est effectuée sans modifier le code source dudit composant. La configuration du composant est réalisée lors du déploiement, au moyen d'un outil 22 de déploiement, à partir du descripteur 15 de déploiement du composant 8. Pour la configuration du composant, l'outil 22 manipule le descripteur 15 de déploiement et non le composant 8 lui-même. Le descripteur 15 contient les propriétés (« CardProperties » dans l'annexe 1) du composant susceptibles d'être éditées au moment du déploiement. Un conteneur 21 est créé pour chaque type de composant 8 EJB au sein du serveur 3 lors du déploiement. Le serveur 3 est capable de prendre en compte plusieurs conteneurs 21. Dans la présente forme de réalisation, les moyens de mise en correspondance et d'adaptation comprennent l'outil 22 de déploiement et le descripteur 15 de déploiement.

Le conteneur Card 21 contrôle le composant 8 EJB qu'il contient. La persistance du composant 8 EJB est gérée dans le conteneur 21 par le serveur 3 de manière entièrement transparente pour le client 2 qui l'utilise.

Le serveur 3 EJB gère le conteneur 21 et expose au client 2 les méthodes métiers du composant EJB.

Le serveur 3 EJB supportant l'environnement d'exécution des composants EJB offre tous les services requis pour le fonctionnement des composants EJB tels qu'un service 23 transactionnel (Tx sur la figure 1), et un service 24 de sécurité, et utilise les services 4a et 6 de stockage, et le service 4b de nommage. Le service 23 transactionnel est dévolu à la gestion de l'exécution de transactions, opérations réalisées entre deux ordinateurs interconnectés (sur la figure 1, machines 3 et 4a par exemple) possédant l'un, l'autre ou les deux une base de données. Le service 24 de sécurité réalise la protection du serveur 3 en assurant notamment un contrôle d'accès aux données. Le service 6 de stockage est accédé à partir de l'interface programmatique applicative, API 13 JDBC. Les services de stockage 4a et de nommage 4b sont utilisés à partir de l'API 14 JNDI. L'interface 14 JNDI est utilisée pour le nommage et le stockage dans la présente forme de réalisation.

Le serveur 3 disposant des services transactionnel, de sécurité, de nommage et de stockage, un développeur n'a pas à fournir lesdits services et se concentre sur la logique métier de l'application. Le développeur code la logique métier dans les composants 8 EJB réutilisables et susceptibles d'être accédés par des programmes applicatifs clients des machines 2 client, appelés par extension client 2.

Le système 1 selon la présente invention comprend au moins une classe 25 de conversion permettant de transformer un objet vu du client en objet vu de l'annuaire 4 et inversement.

Pour chaque type d'attribut LDAP, il existe une classe de conversion, l'ensemble des conversions permettent de transformer l'ensemble des attributs vu du client en ensemble d'attributs vu de LDAP et réciproquement.

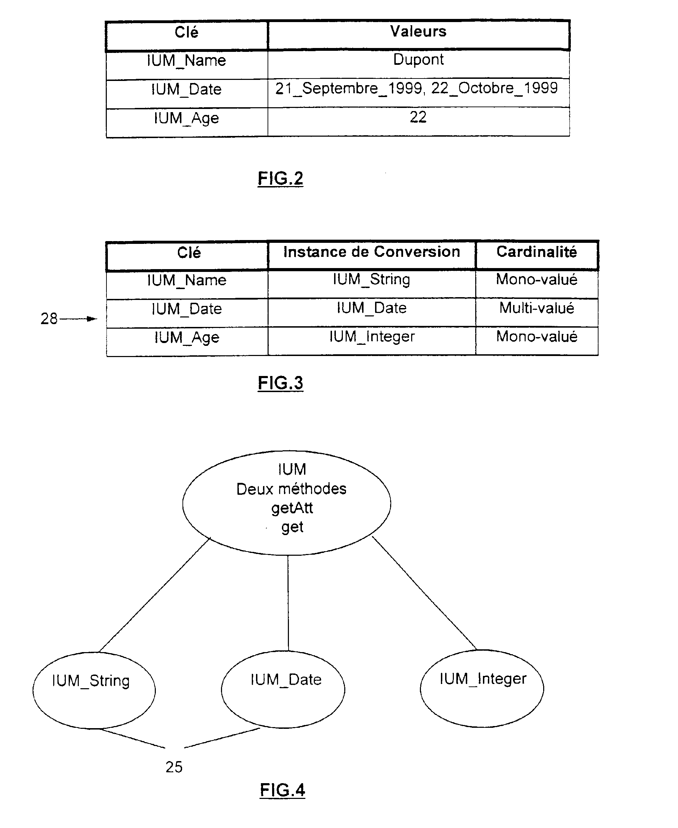

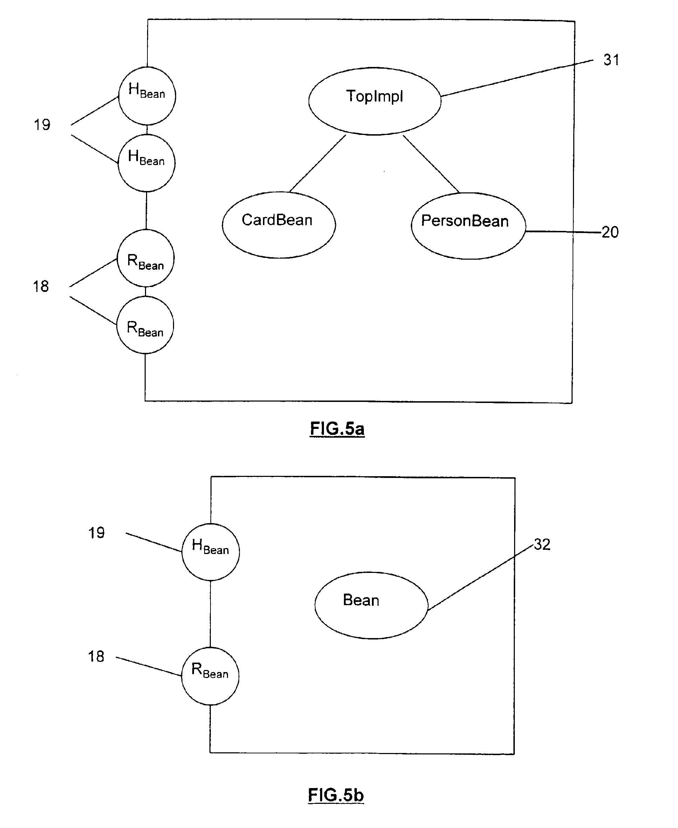

L'annexe 4 montre un exemple de codage de la classe 25 de conversion. Chaque classe est associée à un type d'attribut LDAP déterminé et dispose de deux méthodes « get() » ( de signature « public Object get(Object value, int card) ») et «getAtt()» ( de signature « public BasicAttribute getAtt(String key, Object value, int card) ») pour effectuer la conversion d'un attribut vu de LDAP en attribut vu du client (méthode « get() »), ou la conversion d'un attribut vu du client en attribut vu de LDAP (méthode « getAtt() »). Comme le montre les figures 3 et 4 à titre d'exemple, les classes de conversion lUMString, lUMDate, lUMlnteger correspondant chacune à un type d'attribut IUM_Name, IUM_Date, IUM_Age implémentent la même interface IUM qui comporte les méthodes de conversion « get() » et « getAtt() » (le terme IUM ne recouvre aucune signification particulière et a été choisi comme préfixe pour identifier les classes de conversion). L'ensemble des attributs d'un client (rassemblés dans une entrée client) est transformé pour construire l'ensemble des attributs (de type Attribute) qui forment l'entrée LDAP (l'ensemble des attributs de type Attribute sont rassemblés dans une structure de type Attributes). Le principe issu des classes de conversion est extensible, à savoir que tout nouveau type d'attribut est susceptible d'être supporté : il suffit de rajouter une nouvelle classe de conversion adaptée à ce nouveau type.

Le système comprend des moyens 27 de mémorisation de tables 28 (figures 1 et 3) de conversion définissant l'instance de classe 25 de conversion adaptée au type d'attribut traité.

Les tables 28 de conversion établissent la correspondance entre le type de l'attribut traité et, l'instance de classe de conversion et la cardinalité associées audit type d'attribut. De plus, les tables 28 de conversion associent le type d'attribut traité au type de stockage dans LDAP (chaîne de caractère ou tableau d'octets).

Lors de la création de la table de conversion, les instances de la table sont créés et associés au type d'attribut.

La machine 2 cliente rassemble les données d'une entrée LDAP auxquelles correspondent une instance de composant EJB, sous forme d'une entrée client 29 telle que représentée sur la figure 1 contenue dans des moyens 30 de mémorisation. L'entrée client 29 regroupe un ensemble d'attributs, chaque attribut étant identifié par une clé et associé à au moins une valeur.

Dans la forme de réalisation illustrée dans les annexes, le format utilisé pour représenter les données d'une table 28 de conversion et d'une entrée 29 client est une table de hachage (type « java.util.Hashtable » ou « hashtable » dans le langage java). Chaque attribut de l'entrée 29 client est représenté par une ligne de la table de hachage.

Selon un développement de l'invention, le code de la persistance est rendu générique : le code est commun aux différents types d'entrées LDAP et rendus spécifiques à un type d'entrée lors du déploiement et de l'instanciation (première forme de réalisation du développement) ou de l'instanciation (deuxième forme de réalisation du développement).

Selon la première forme de réalisation dudit développement selon l'invention, le système 1 comporte :
- une classe 31 d'implémentation générique commune aux différents types de composant 8 EJB, qui implémente des méthodes utilisées par le client 2 et des méthodes qui permettent de gérer le cycle de vie du composant 8 EJB;
- au moins une classe 20 de composant EJB qui hérite des méthodes de la classe 31 et qui implémente des méthodes d'accès aux informations de correspondance.

Dans l'exemple illustré sur la figure 1, la première forme de réalisation dudit développement correspond à la première forme de réalisation du système 1 décrite plus haut.

La classe 31 d'implémentation générique (voir annexe 5 représentant un exemple de codage de classe générique), appelée Toplmpl, implémente les méthodes du cycle de vie d'un composant 8 EJB, à savoir les méthodes nécessaires au composant EJB pour s'intégrer dans un serveur EJB ainsi que les méthodes métier nécessaires pour lire/modifier les entrées LDAP. Le code est générique dans le sens qu'il est commun à différents types d'entrées LDAP: il est rendu spécifique à un type d'entrée LDAP par le descripteur de déploiement. Le code est générique et factorisé dans la classe 31 d'implémentation générique. Tous les composants EJB devant être rendus persistants sur LDAP héritent des méthodes de la classe d'implémentation générique; les interfaces de gestion 19 et distante 18 comportent les signatures des méthodes respectivement de gestion et métier héritées de la classe d'implémentation générique. Les moyens de mise en correspondance et d'adaptation sont en partie contenus dans la classe 31 d'implémentation générique; le code de la persistance est développé dans la classe 31 d'implémentation générique Toplmpl et le mode de persistance est donc explicite puisque présent dans le code du composant 8 EJB lui-même.

Sur la figure 1, est représentée une instance 20 de composant. La classe 31 d'implémentation générique est représentée pour visualiser l'héritage des méthodes par l'instance 20.

On voit sur la figure 5a deux types de classes 20 de composant 8 EJB (CardBean et PersonBean) qui héritent de la classe 31 d'implémentation générique. L'annexe 6 est un exemple de codage de classe 20 de composant EJB ; l'annexe 6 montre l'héritage de la classe générique : « CardBean extends Toplmpl ». La classe 20 de composant 8 CardBean stocke des informations propres à toutes les instances de composant EJB de type Card. Lesdites informations sont accessibles en lecture et en écriture par un ensemble de méthodes d'accès à des variables statiques (méthodes « getCtx() » « setCtx()« « getAttribs () » « setAttribs() », « getObjClass() » et « setObjClass() », « getAttribsName() » « setAttribsName() »). Lesdites méthodes d'accès permettent à la classe d'implémentation générique Toplmpl d'accéder aux informations de correspondance communes à toutes les instances du même composant EJB Card. Lesdites informations de correspondance mentionnées plus haut sont : le contexte de travail JNDI (accessible par « setCtx() », « getCtx() »), les valeurs de la classe d'objet (accessibles par « getObjClass() », « setObjClass() »), et la liste des attributs de l'entrée (accessibles par « getAttribsName() », « setAttribsName() »). Les variables statiques sont intégrées aux moyens de mise en correspondance et d'adaptation dans la classe 20 de composant. Lesdites informations de correspondance sont des informations de configuration du composant et sont à l'origine positionnées dans le descripteur 15 de déploiement: elles sont montées en mémoire dans les variables statiques lors de l'instanciation de la classe 20 de composant EJB concernée.

Selon une deuxième forme de réalisation selon l'invention, le système 1 comporte une classe 32 de composant EJB générique (figure 5b). Il est générique dans la mesure où il est susceptible de s'adapter à différents types d'entrées LDAP.

La deuxième forme de réalisation dudit développement correspond à la deuxième forme de réalisation du système 1 décrite plus haut. Les moyens de mise en correspondance et d'adaptation sont intégrés à la classe 32 de composant générique. Ils comprennent des variables d'instance.

Les figures 5a et 5b montrent les différences entre la première et la deuxième forme de réalisation du développement relatif à le généricité selon la présente invention. Les deux formes permettent de rendre générique les informations manipulées pour simplifier la gestion du système et du procédé de gestion de la persistance.

Selon la première forme de réalisation illustrée sur les figures 1 et 5a, chacune des classes de composants EJB, CardBean, PersonBean ne sait interfacer qu'un seul type d'entrée LDAP. Lors du déploiement des composants EJB, les composants EJB héritent du comportement de la classe 32 générique.

Selon la deuxième forme de réalisation, la classe de composant EJB générique est susceptible d'interfacer différents types d'entrées LDAP. Un composant EJB correspond à différents types d'entrées LDAP. Les différents types d'entrées sont gérées par la même classe de composant EJB générique mais pour chaque entrée LDAP, il correspond une instance différente de cette classe de composant générique. Le système selon l'invention comprend une unique interface distante, une unique interface de gestion, une unique classe de composant générique, un unique descripteur de déploiement.

Dans les deux formes de réalisation, on utilise la table de conversion 28 pour contenir les informations nécessaires à la transformation des attributs client en attributs LDAP et réciproquement.

Le procédé selon la présente invention gère la persistance des composants 8 EJB intégrés au serveur 3 EJB du système 1 informatique, au travers de l'annuaire 4 LDAP et consiste à faire correspondre et à adapter un composant 8 EJB entité à un type d'entrée LDAP 9 déterminé sur un annuaire donné.

Le procédé consiste à déployer des instances de classe EJB entité 18, 19, 20, 31, 32 qui intègrent des informations de correspondance sur les entrées 9 LDAP de l'annuaire LDAP contenues dans le descripteur de déploiement et/ou retrouvées à partir des informations d'adaptation transmises par le client 2.

Le procédé selon la présente invention interface l'annuaire LDAP à travers l'API JNDI, pour créer, lire, modifier, chercher et/ou supprimer les différents types d'entrées LDAP en s'adaptant au schéma LDAP soit de manière statique au déploiement du composant EJB (première forme de réalisation du procédé selon l'invention), soit de manière dynamique (deuxième forme de réalisation), et ceci afin d'assurer la persistance de composants EJB, d'un serveur EJB.

Le procédé selon la présente invention fait correspondre à une classe d'objet un composant EJB.

Le procédé de gestion opère de la manière suivante dans le système selon la première forme de réalisation.

Lors du déploiement, les informations de correspondance du composant 8 EJB sont écrites dans le descripteur 15 de déploiement, à savoir la classe d'objet, les noms des attributs de l'entrée LDAP, la source 17 de donnée. Lesdites informations de correspondance sont nécessaires à l'adaptation du code générique de la classe 31 d'implémentation générique au fonctionnement d'une classe 20 dérivée associée à une classe d'objet donnée. Dans l'exemple illustré sur la figure 1, le déploiement génère la classe 20 de composant EJB CardBean, la classe 31 générique Toplmpl, la classe de l'interface distante 18, la classe de l'interface de gestion 19, et le descripteur 15 de déploiement Card.

.Lorsque rendu nécessaire par un appel client, le serveur crée une instance d'un composant EJB. Lors de l'instanciation, les instances 20 héritent des comportements (création, suppression, modification, lecture, recherche...) de la classe 31 générique. Les informations de correspondance sont montées en mémoire, à savoir copiées dans l'instance 20 de classe de composant EJB. Le nom de la source 17 de donnée est alors transformé en contexte de travail JNDI. Les informations de correspondance sont stockées dans les variables statiques du composant EJB. Toutes les instances 20 de classe de composants EJB se comportent de manière identique, la manière dictée par la classe générique mais personnalisée par les informations de correspondance du descripteur de déploiement. Pour chaque type d'entrée LDAP géré par l'annuaire LDAP, il correspond un type de composant EJB complet avec une interface de gestion, une interface distante, une instance de classe de composant, un descripteur de déploiement. Pour chaque entrée différente de même type, il correspond une instance différente dudit composant.

Le client effectue des appels de méthodes sur l'interface 19 de gestion du composant concerné pour créer, supprimer, modifier ou rechercher dans l'annuaire LDAP. Comme vu précédemment, le format des informations vues du client (entrée 29 client dans la forme de réalisation décrite) et le format des informations dans LDAP (entrée 9 LDAP) impose qu'une conversion soit faite entre le client et l'annuaire 4 LDAP échangeant ces informations.

Le procédé selon la présente invention consiste à échanger des informations entre le client et l'annuaire LDAP en effectuant une conversion au moyen d'au moins d'une classe 25 de conversion.

Dans ce qui suit, l'échange consistant en la création d'une entrée 9 LDAP à partir d'une entrée client est décrit. Selon une forme de réalisation, le client 2 transmet au composant EJB par l'interface de gestion H_{card} les informations sous forme d'une table de hachage représentant l'entrée 29 client.

Comme le montre la figure 2, l'entrée 29 client est constituée d'une liste de nom d'attributs (de clés sur la figure 1) tels que par exemple l'attribut IUM_Date, et d'une ou plusieurs valeurs associées à cet attribut, par exemple « 21_Septembre_1999 », « 22_Octobre_1999 » (figure 2).

Le procédé consiste notamment à transformer l'entrée vu du client en entrée LDAP. L'entrée LDAP se caractérise, comme vu précédemment, au niveau du client par ladite table de hachage contenant les différents attributs et au niveau de LDAP par le dn de type chaîne de caractères et par la collection d'objets de type Attribute formant un unique objet de type Attributes. L'entrée envoyée par le client, à savoir, la table de hachage représentant l'entrée 29 client est balayée ligne par ligne. En fonction du type de l'attribut de la ligne considérée, le procédé recherche l'instance d'une classe de conversion adaptée dans la table 28 de conversion. Il existe une instance de classe de conversion par type d'attribut. La classe de conversion adaptée à un attribut connaît la transformation à effectuer entre un attribut vu du client et un attribut (de type Attribute) LDAP. Par exemple, comme le montre la figure 2, la première ligne balayée de l'entrée client est l'attribut IUM_Name. L'instance de classe de conversion associée dans la table de conversion représentée sur la figure 3 est une instance de la classe lUMString qui permet de manipuler des attributs de type IUM_Name de cardinalité mono-valué. Les méthodes de transformation d'attributs de la classe de conversion obtenue (la méthode «getAtt()» dans l'exemple illustré) sont appelées autant de fois que la table de hachage client comprend de lignes.

Dans l'exemple illustré, la méthode de transformation « getAtt() » est appelée pour transformer l'attribut IUM_Name de la table de hachage client en objet de type Attribute de l'entrée LDAP. La méthode « getAtt() » renvoie un objet de type Attribute à partir du nom de l'attribut, IUM_Name, de ses valeurs données par l'entrée client, et de sa cardinalité. Après le balayage de l'entrée client, le procédé construit l'objet de type Attributes à partir des différents objets de type Attribute.

Le procédé consiste ensuite à obtenir le nom de l'entrée LDAP concernée. Le procédé, lors du balayage de l'entrée client, retient l'attribut particulier destiné au nommage, dans l'exemple décrit, l'attribut IUM_Name et l'intègre à une chaîne de caractères. La chaîne de caractères est constituée de l'attribut concerné, du signe = et de la valeur prise par l'attribut:
<IUM_Name=Dupont>.

Le contexte de l'entrée LDAP dans l'annuaire LDAP est obtenu à partir de la source 17 de données LDAP indiquée dans le descripteur 15 de déploiement. Le procédé selon la présente invention crée l'entrée LDAP constituée de la manière décrite précédemment dans la partie de l'annuaire LDAP indiquée par le contexte.

Le procédé effectuant un chargement en mémoire selon la méthode « ejbLoad() » consiste à faire une recherche dans LDAP en construisant un filtre de recherche LDAP particulier. Toutes les entrées 9 LDAP ont une information distinctive (IUM_Id dans notre exemple) dont la valeur est unique pour chacune des entrées. Toute autre information telle que le dn aurait pu convenir. Le serveur génère les valeurs de ces IUM_Id lors du procédé de création décrit ci-dessus au moyen d'un algorithme de génération de clé unique. Si le procédé effectue une recherche LDAP avec un filtre de recherche portant sur cette information distinctive, une seule entrée LDAP est remontée. Le serveur retrouve la clé associée à l'instance 20 : la valeur de la clé correspond à la valeur de cette information distinctive. Le procédé de chargement permet de retrouver l'entrée, et de la charger en mémoire.

Des mécanismes similaires sont employés pour la transformation d'une entrée LDAP en objet vu du client. Les informations nécessaires pour modifier, détruire, stocker, charger et lire sont fournies par les mêmes éléments constitutifs du système 1 et plus particulièrement le descripteur de déploiement, la classe de conversion et la table de conversion, en utilisant des mécanismes similaires au procédé de création d'une entrée LDAP décrit précédemment.

Selon une deuxième forme de réalisation du procédé selon l'invention, le client 2, lors de l'instanciation du composant 32 générique EJB déclenché par un appel client, transmet une information d'adaptation, la COC, sur l'entrée 9 LDAP de l'annuaire 4 LDAP du système 1. Chacune des instances du composant 8 EJB générique se comporte différemment suivant l'information apportée par le client lors de l'instanciation. La généricité du composant EJB est rendue spécifique à un type d'entrée LDAP en retrouvant à partir de l'information d'adaptation les informations de correspondance relatives à ce type d'entrée LDAP de manière dynamique, c'est-à-dire lors de l'instanciation.

Le procédé consiste, à l'aide des moyens de mise en correspondance et d'adaptation, à interroger directement le schéma LDAP pour retrouver les listes d'attributs obligatoires et facultatifs en fonction de la COC transmise. La source 17 de données est obtenue comme dans la première forme de réalisation à partir du descripteur de déploiement. Les moyens de mise en correspondance et d'adaptation intègrent dans les variables d'instance lesdites informations de correspondance obtenues.

Le procédé selon la deuxième forme de réalisation consiste à échanger des informations entre le client 2 et l'annuaire 4 LDAP en effectuant une conversion de la même façon que pour le procédé selon la première forme de réalisation.

Selon un développement de la présente invention, le procédé permet d'optimiser les accès en lecture et écriture. En effet, les méthodes métiers étant non transactionnelles, leurs exécutions au sein du serveur sont toujours précédées d'un «ejbLoad()» et sont toujours suivies d'un « ejbStore() » que l'instance de classe de composant ait été accédée en lecture ou en écriture. Un drapeau est ajouté comme variable de la classe générique d'implémentation ou de la classe de composant générique. Le drapeau est hérité par chaque instance de classe de composant EJB. Le drapeau indique si l'état mémoire du composant EJB est différent ou pas de l'état du composant dans l'annuaire LDAP. Par exemple, le drapeau est représenté par une variable booléenne appelée isModified prenant la valeur vrai par défaut :
boolean isModified = true

Si la variable isModified prend la valeur faux (false), l'état mémoire du composant EJB est égal à l'état du composant dans l'annuaire LDAP.

Si la variable isModified prend la valeur vrai (true), l'état mémoire du composant EJB est différent de l'état du composant dans l'annuaire LDAP.

Le drapeau indique aux méthodes de chargement et stockage si le chargement ou le stockage doit être effectivement fait ou pas.

Lorsque le composant doit être chargé en mémoire par le serveur EJB, un appel à la méthode de chargement est effectué. La méthode de chargement n'effectue aucune opération si le drapeau a la valeur faux. Si le drapeau a la valeur vrai, la méthode de chargement recharge le composant de l'annuaire LDAP vers la mémoire et repositionne la variable isModified à la valeur faux.

Lorsque le composant est modifié par la méthode set, la variable isModified prend la valeur vrai.
Lorsque le composant est accédé en lecture par la méthode get, la variable isModified reste inchangée.

Lorsque le composant doit être écrit dans l'annuaire LDAP par le serveur EJB, un appel à la méthode d'enregistrement est effectué. La méthode d'enregistrement n'effectue aucune opération si le drapeau a la valeur faux. Si le drapeau a la valeur vrai, la méthode d'enregistrement écrit le composant dans l'annuaire LDAP et repositionne la variable isModified à la valeur faux.

La présente invention concerne le procédé de gestion de la persistance des composants 8 EJB intégrés au serveur 3 EJB du système 1 informatique, caractérisé en ce qu'il consiste à gérer la persistance au travers de l'annuaire 4 accédé par LDAP en faisant correspondre et en adaptant un composant 8 EJB entité à un type d'entrée LDAP 9 déterminé sur un annuaire donné.

Selon une première forme de réalisation, le procédé consiste à faire correspondre le composant 8 EJB entité au type d'entrée LDAP 9 lors du déploiement et de l'instanciation en intégrant à au moins une instance de classe des informations de correspondance écrites dans un descripteur 15 de déploiement.

Selon une deuxième forme de réalisation, le procédé consiste à faire correspondre le composant 8 EJB entité au type d'entrée LDAP 9 lors de l'instanciation du composant 8 en intégrant à au moins une instance de classe des informations de correspondance retrouvées à partir d'une COC transmise par un client 2.

Le procédé selon la présente invention consiste à échanger des informations entre le client 2 et l'annuaire 4 LDAP en effectuant une conversion au moyen d'au moins une classe 25 de conversion.

Le procédé consiste à effectuer un chargement en mémoire en construisant le filtre de recherche LDAP sur une information distinctive dont la valeur est unique pour chaque entrée 9 LDAP de l'annuaire 4.

La présente invention concerne également le système informatique comprenant au moins un client 2, au moins un serveur 3 EJB comportant les composants 8 EJB, au moins un annuaire accédé par LDAP constitué des entrées LDAP 9, caractérisé en ce qu'il comporte des moyens permettant de faire correspondre et d'adapter un composant 8 EJB entité à un type d'entrée LDAP 9 déterminé sur un annuaire donné.

Le système comprend au moins une classe 25 de conversion permettant de transformer un objet vu du client 2 en objet vu de l'annuaire 4 et inversement.

Le système comprend les moyens 27 de mémorisation de tables 28 de conversion définissant l'instance de classe 25 de conversion adaptée au type d'attribut traité. Les tables 28 de conversion associent le type d'attribut traité au type de stockage dans LDAP.

Selon une première forme de réalisation, le système comporte :
- la classe 31 d'implémentation générique commune aux différents types de composant 8 EJB, qui implémente des méthodes utilisés par le client 2 ;
- au moins une classe 20 de composant EJB qui hérite des méthodes de la classe 31 et qui implémente des méthodes d'accès à des informations de correspondance.

Selon une deuxième forme de réalisation, le système comporte la classe 32 de composant EJB générique.

Selon un développement de l'invention, le drapeau indiquant si l'état mémoire du composant EJB est différent ou non de l'état du composant dans l'annuaire est prévu.

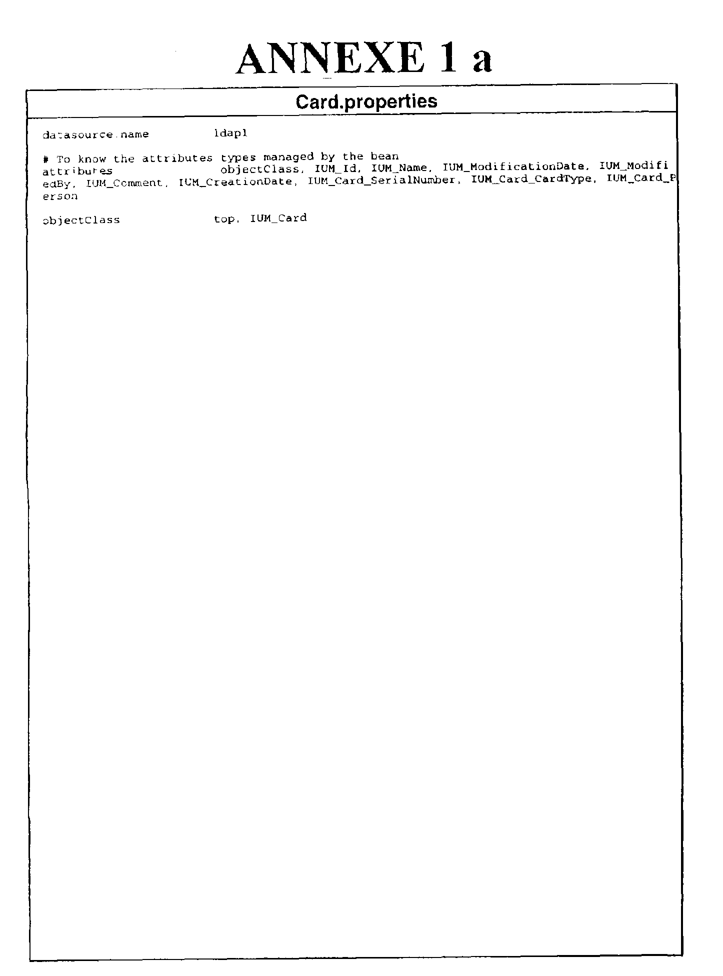

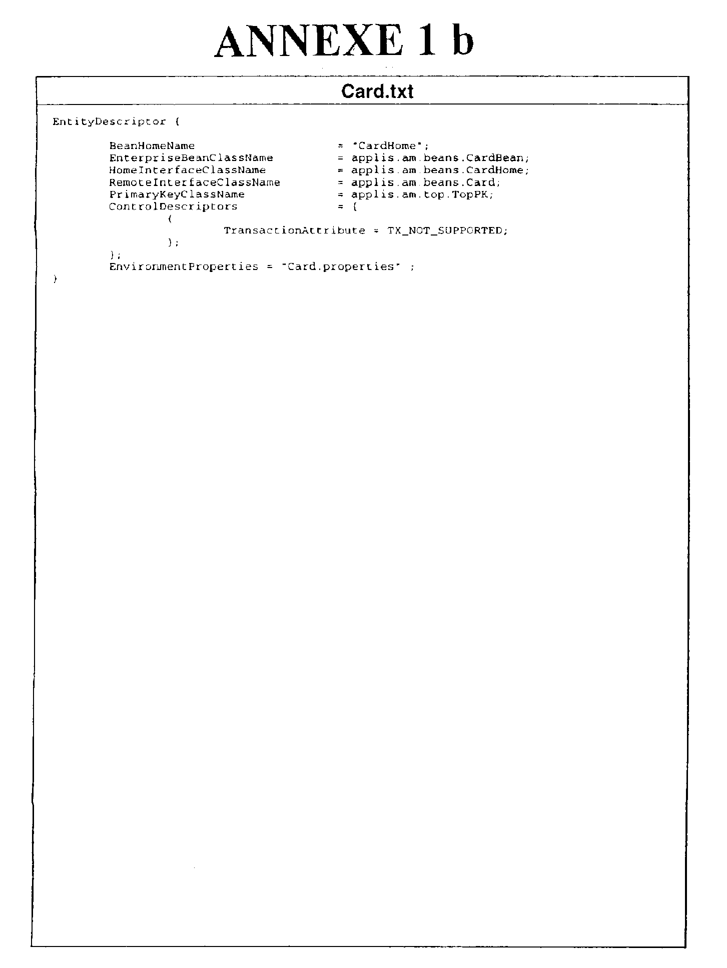

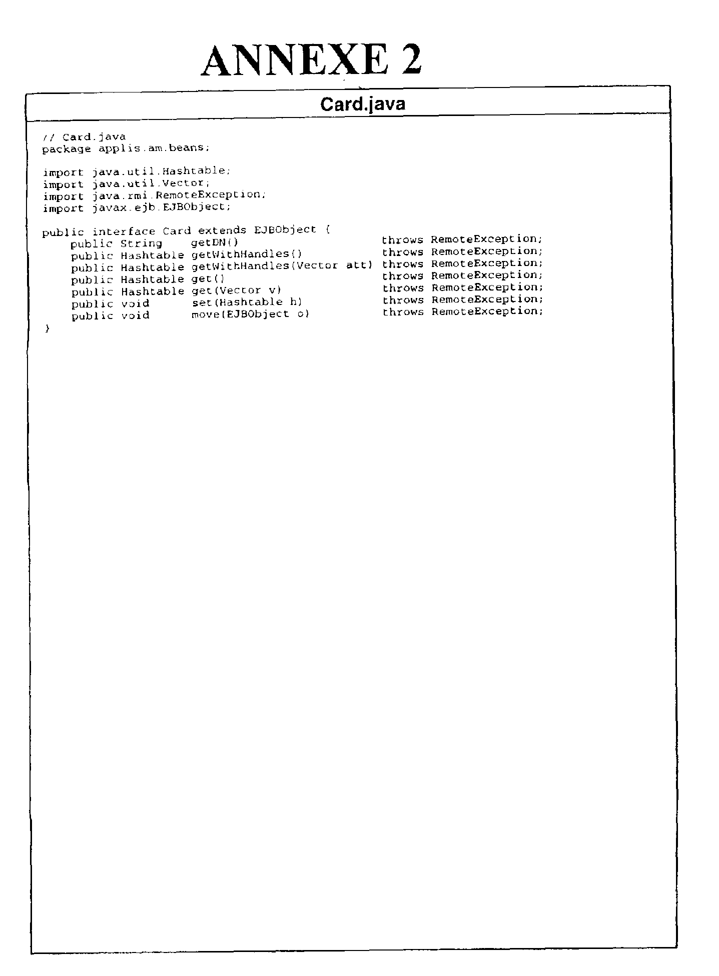

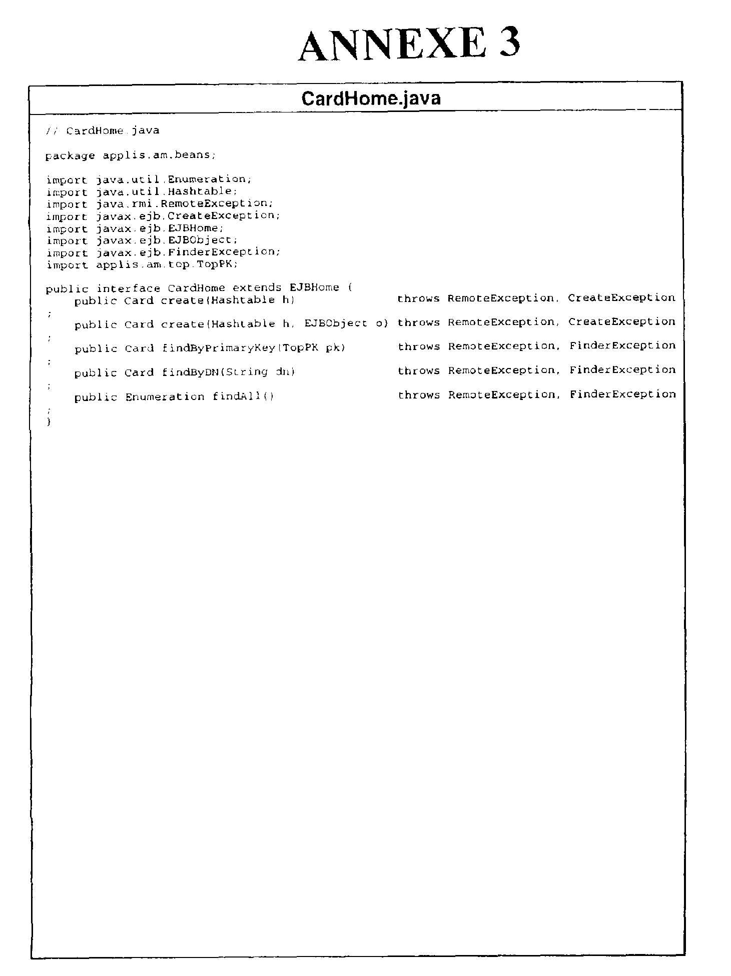

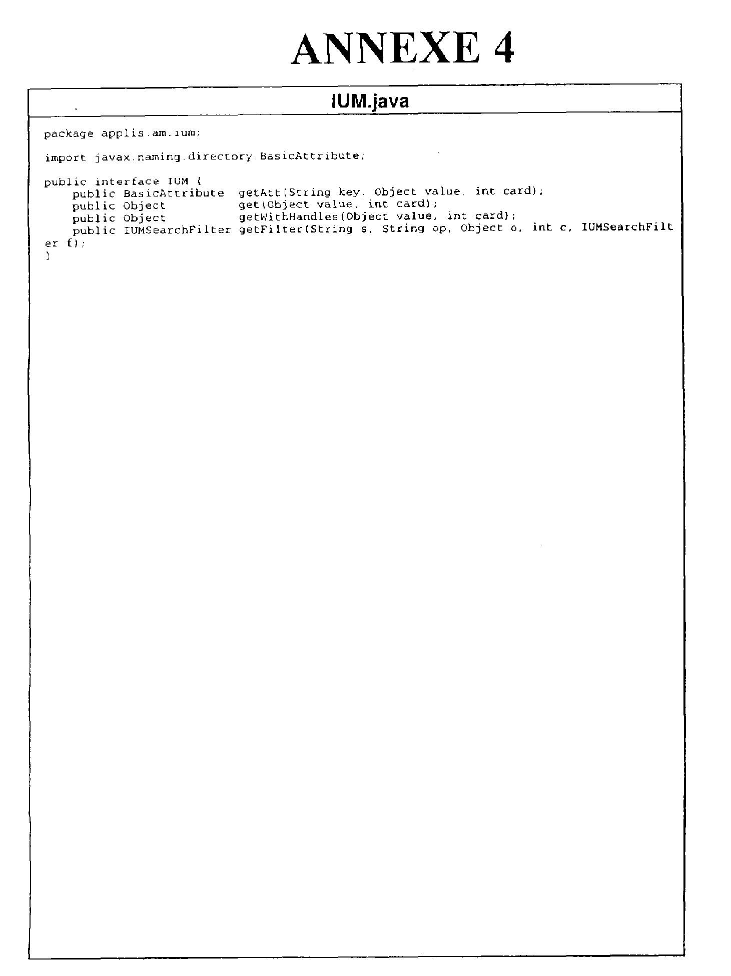

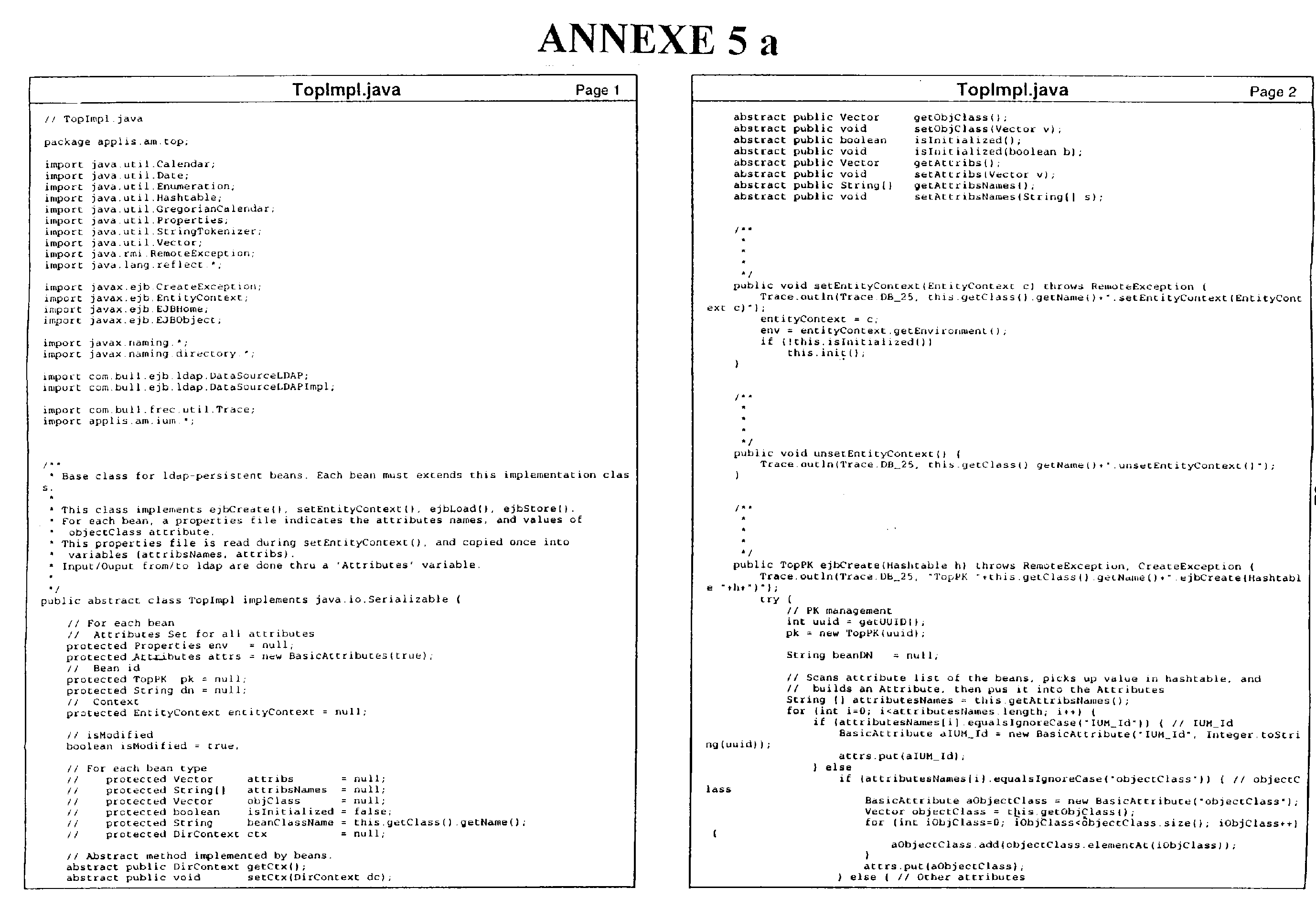

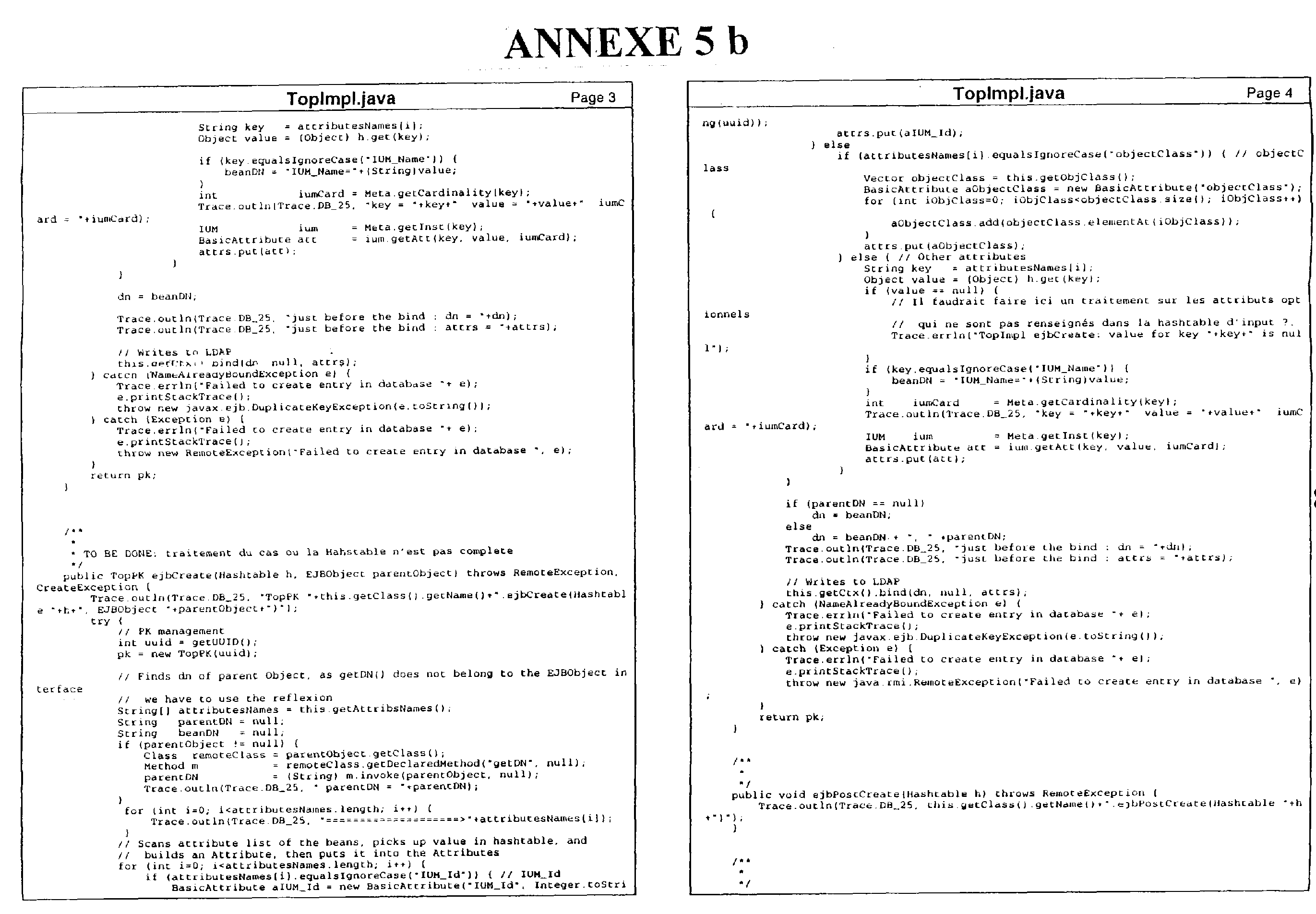

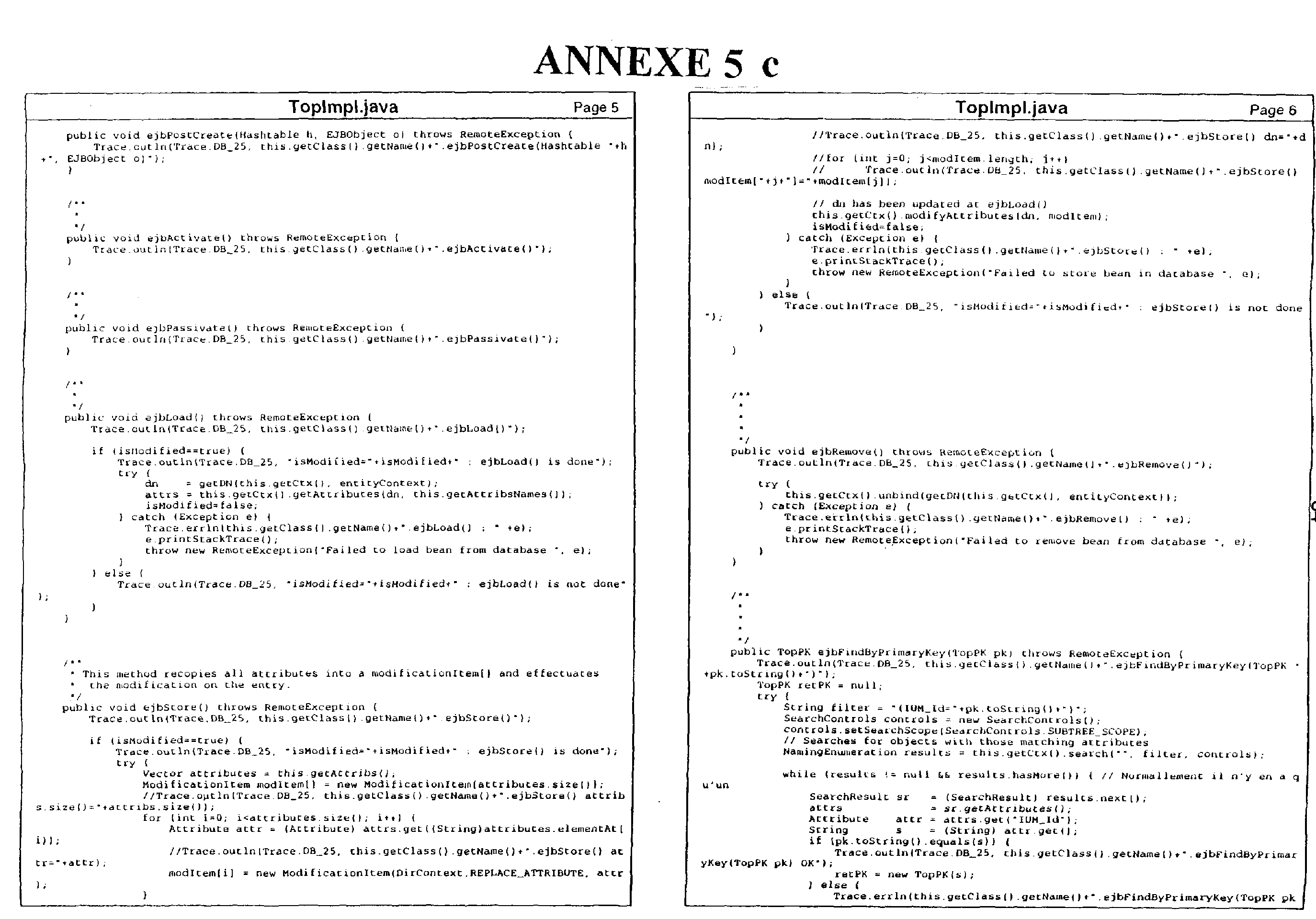

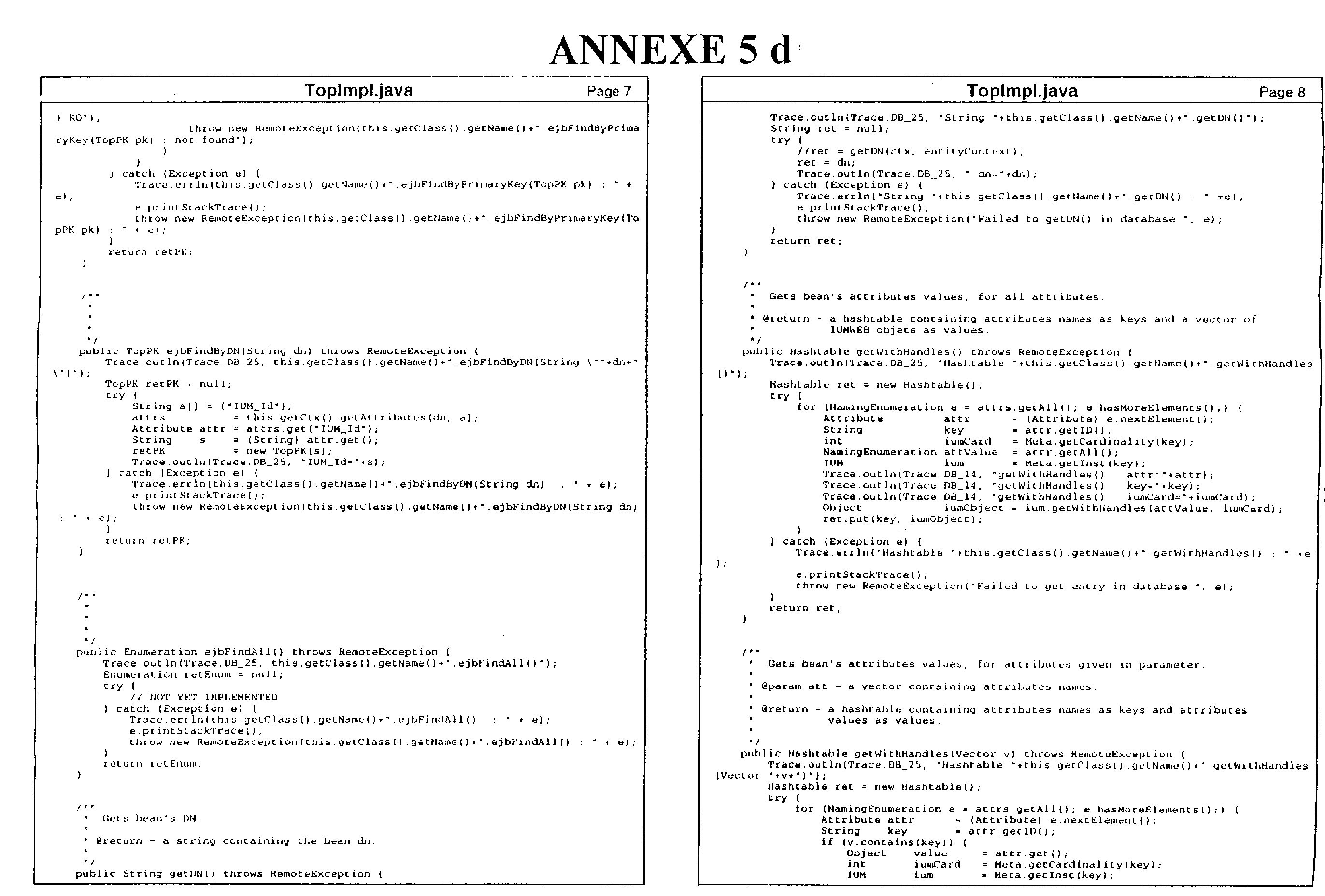

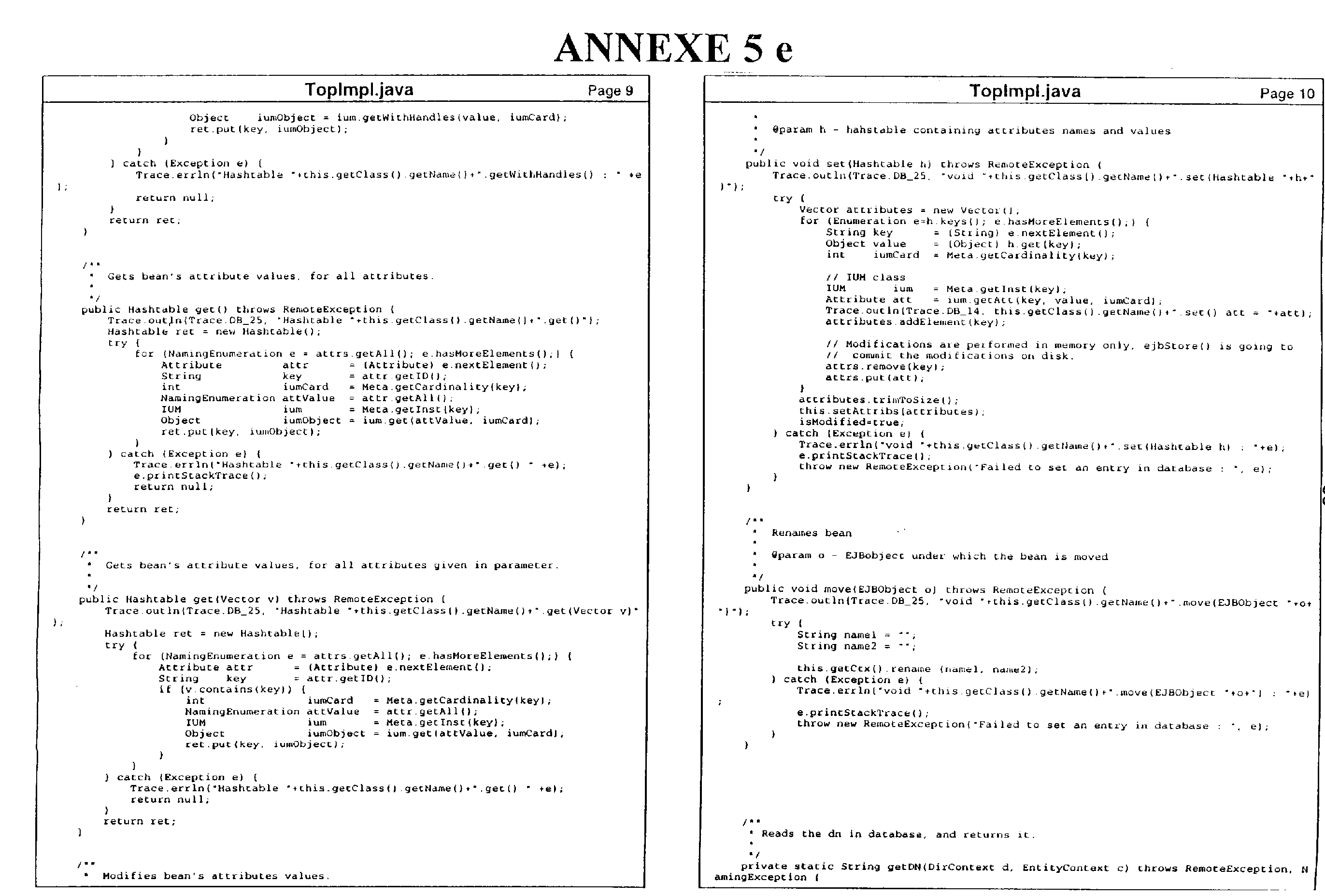

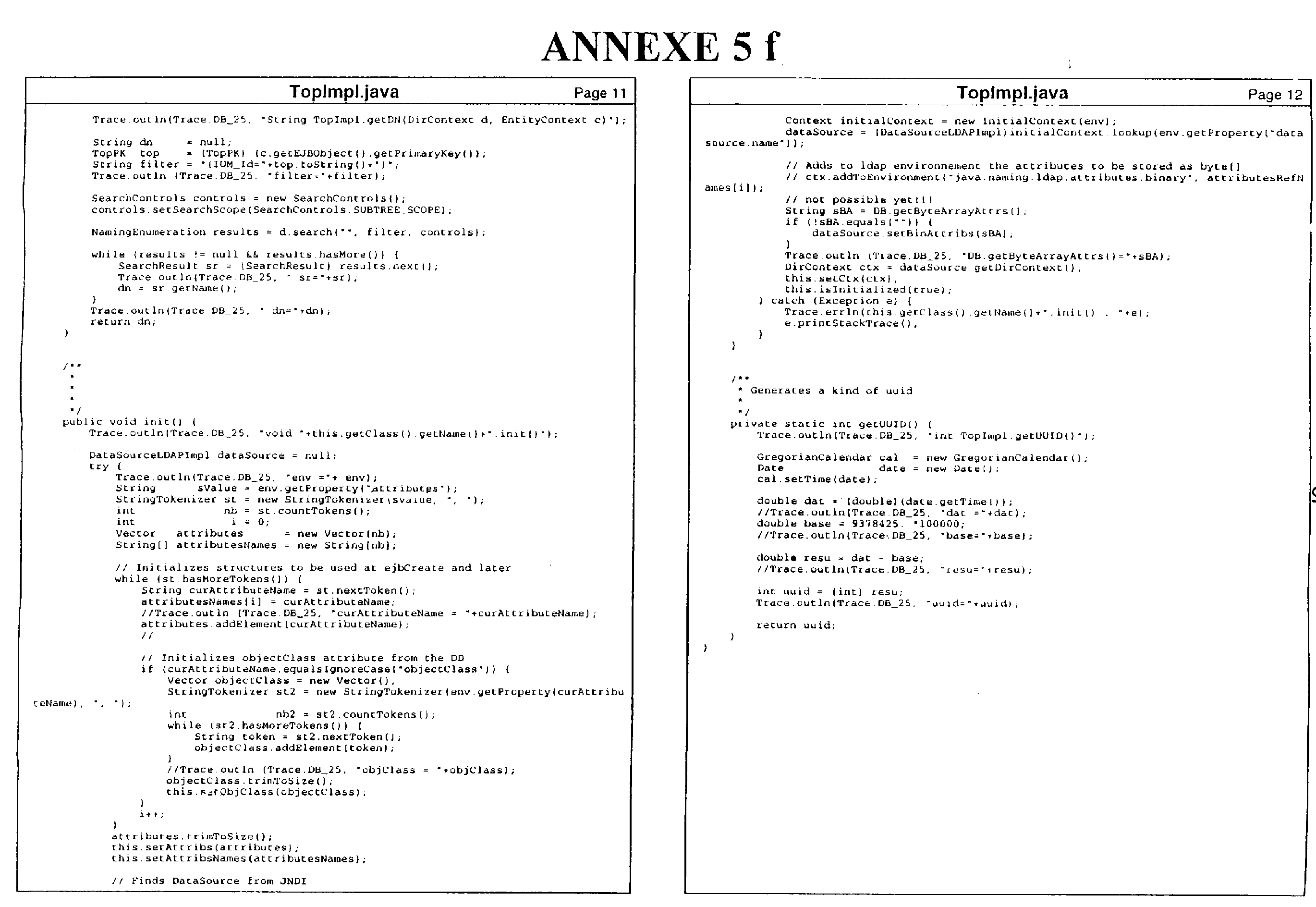

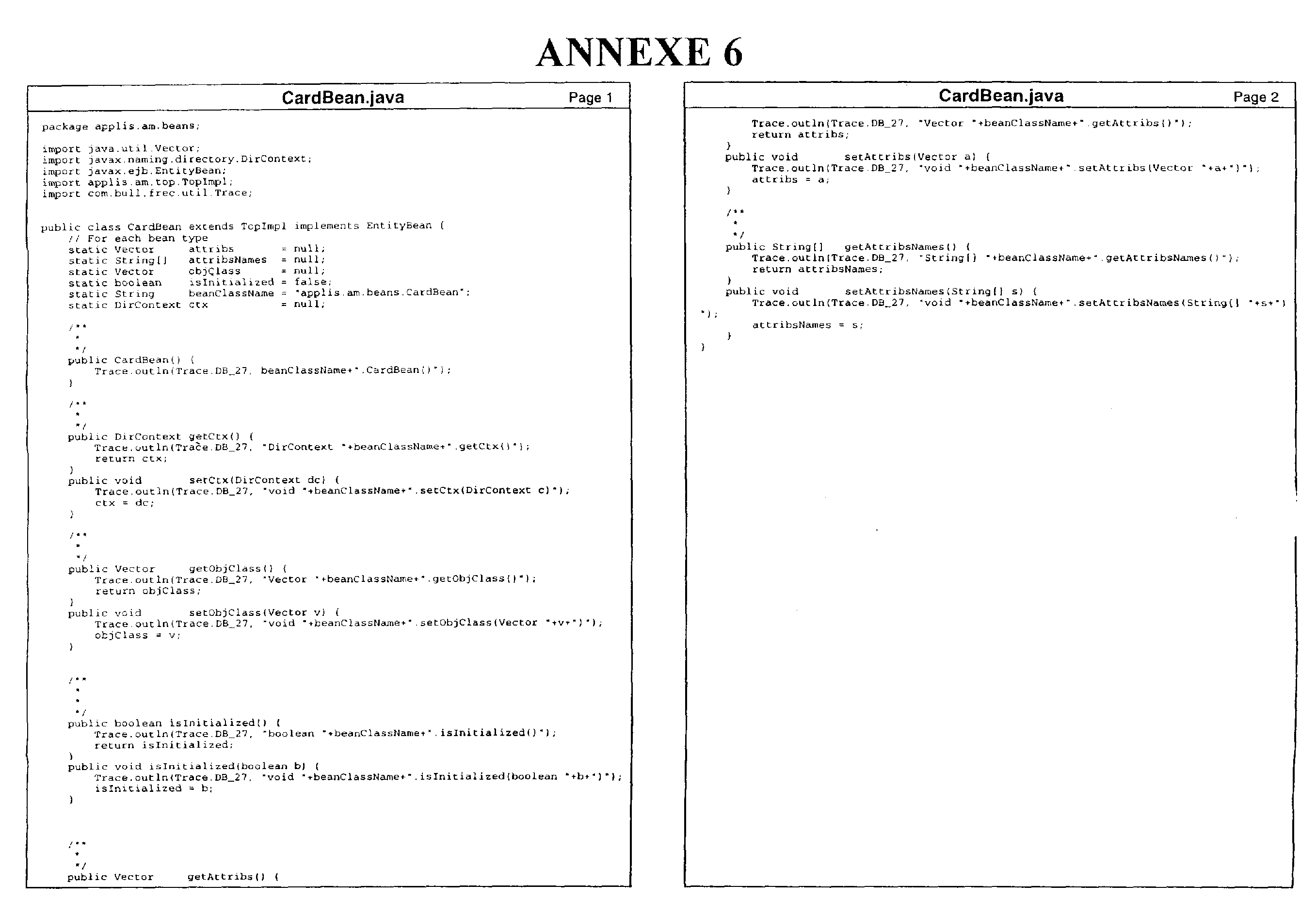

## Revendications

1. Procédé de gestion de la persistance de composants (8) EJB intégrés à un serveur (3) EJB d'un système (1) informatique, caractérisé en ce qu'il consiste à gérer la persistance au travers d'un annuaire (4) accédé par LDAP en faisant correspondre et en adaptant un composant (8) EJB entité à un type d'entrée LDAP (9) déterminé sur un annuaire donné.

2. Procédé selon la revendication 1, caractérisé en ce qu'il consiste à faire correspondre le composant (8) EJB entité au type d'entrée LDAP (9) lors du déploiement et de l'instanciation en intègrant à au moins une instance de classe des informations de correspondance écrites dans un descripteur (15) de déploiement.

3. Procédé selon la revendication 1, caractérisé en ce qu'il consiste à faire correspondre le composant (8) EJB entité au type d'entrée LDAP (9) lors de l'instanciation du composant (8) en intègrant à au moins une instance de classe des informations de correspondance retrouvées à partir d'une COC transmise par un client (2).

4. Procédé selon l'une des revendications 1 à 3, caractérisé en ce qu'il consiste à échanger des informations entre un client (2) et l'annuaire (4) LDAP en effectuant une conversion au moyen d'au moins une classe (25) de conversion.

5. Procédé selon l'une des revendications 1 à 4, caractérisé en ce qu'il consiste à effectuer un chargement en mémoire en construisant un filtre de recherche LDAP sur une information distinctive dont la valeur est unique pour chaque entrée (9) LDAP de l'annuaire (4).

6. Système informatique comprenant au moins un client (2), au moins un serveur (3) EJB comportant des composants (8) EJB, au moins un annuaire (4) accédé par LDAP constitué d'entrées LDAP (9), caractérisé en ce qu'il comporte des moyens permettant de faire correspondre et d'adapter un composant (8) EJB entité à un type d'entrée LDAP (9) déterminé sur un annuaire donné.

7. Système selon la revendication 6, caractérisé en ce qu'il comprend au moins une classe (25) de conversion permettant de transformer un objet vu du client (2) en objet vu de l'annuaire (4) et inversement.

8. Système selon la revendication 7, caractérisé en ce qu'il comprend des moyens (27) de mémorisation de tables (28) de conversion définissant l'instance de classe (25) de conversion adaptée au type d'attribut traité.

9. Système selon la revendication 8, caractérisé en ce que les tables (28) de conversion associent le type d'attribut traité au type de stockage dans LDAP.

10. Système selon l'une des revendications 6 à 9, caractérisé en ce qu'il comporte :
• une classe (31) d'implémentation générique commune aux différents types de composant (8) EJB, qui implémente des méthodes utilisés par le client (2) ;
• au moins une classe (20) de composant EJB qui hérite des méthodes de la classe (31) et qui implémente des méthodes d'accès à des informations de correspondance.

11. Système selon l'une des revendications 6 à 9, caractérisé en ce qu'il comprend une classe (32) de composant EJB générique.

12. Système selon l'une des revendications 6 à 11, caractérisé en ce qu'un drapeau indiquant si l'état mémoire du composant EJB est différent ou non de l'état du composant dans l'annuaire est prévu.
